# EUROPÄISCHE PATENTSCHRIFT

(11) **EP 0 535 342 B1**
(45) Veröffentlichungstag und Bekanntmachung des Hinweises auf die Patenterteilung: **29.10.1997**
(21) Anmeldenummer: 92113865.7
(22) Anmeldetag: 14.08.1992
(51) Int. Cl.: G01F 15/02, G01F 15/04, G01F 3/22, G01D 3/028

(54) **Messeinrichtung**
Measuring device
Dispositif de mesure

(30) Priorität: 01.10.1991 DE 4132604
(43) Veröffentlichungstag der Anmeldung: 07.04.1993
(73) Patentinhaber: Schlumberger Rombach GmbH, 76185 Karlsruhe (DE)
(72) Erfinder: Farr, Peter, Dipl.-Ing. (FH), W-7504 Weingarten (DE); Schuhbaum, Heinz, W-6749 Barbelroth (DE); Stuck, Otfried, Dipl.-Ing. (TU), W-7552 Durmersheim 2 (DE); Weisenburger, Wolfgang, Dipl-Ing. (FH), W-7559 Au/Rhein (DE)
(74) Vertreter: Durm, Klaus, Dr.-Ing.

(56) Entgegenhaltungen:
- EP-A- 0 197 177
- DE-A- 2 813 433
- DE-A- 3 933 787
- DE-U- 9 112 193

## Beschreibung

Die Erfindung betrifft eine Meßeinrichtung, insbesondere einen Gaszähler, mit einem Meßwerk, einem Zählwerk, einem zwischen dem Meßwerk und dem Zählwerk vorgesehenen Getriebe mit veränderbarer Übersetzung und mit einem am Getriebe angreifenden, zur Verstellung des Übersetzungsverhältnisses dienenden Stellglied.

Die Erfindung findet Anwendung insbesondere bei Balgengaszählern zur Messung des Verbrauches von Gas von Haushaltungen. Solche Balgengaszähler sind seit Jahrzehnten in großem Umfang im Einsatz, und sie werden in hohen Stückzahlen für Neuinstallationen sowie zum laufenden Ersatz von ausgedienten Geräten hergestellt.

Hinsichtlich der Meßgenauigkeit werden seitens der Behörden und der Abnehmer an Gaszähler hohe Anforderungen gestellt. Balgengaszähler, welche in der Regel vier abwechselnd sich füllende und entleerende Meßkammern aufweisen, messen das den Zähler durchsetzende Gasvolumen, wogegen dem Abnehmer der Heizwert des Gases in Rechnung gestellt werden muß. Die Gasdichte ist aber temperaturabhängig, sie nimmt mit zunehmender Temperatur ab. Von Einfluß auf die Gastemperatur sind die jahreszeitlich bedingte Temperatur des dem Zähler zugeführten Gases, die Installation zwischen dem Hausanschluß und dem Zähler sowie der Aufstellungsort des Zählers im Haus.

Maßnahmen zur Temperaturkompensation von Gaszählern sind seit langem in verschiedenen Ausführungsformen bekannt. So ist unter anderem eine Meßeinrichtung für Gas bekanntgeworden, welche zwischen dem Meßwerk und dem Zählwerk ein Reibradgetriebe aufweist. Dieses Getriebe umfaßt zwei gegeneinander versetzte Reibscheiben und zwei über Zahnräder gekoppelte Reibräder, die mittels eines von einem Bimetall gesteuerten Drehschiebers auf den Reibscheiben zwecks Veränderung der Übersetzung verschiebbar sind. Temperaturbedingte Volumenänderungen des zu messenden Gases werden durch eine im wesentlichen proportionale Übersetzungsänderung auskompensiert (europäische Patentanmeldung 0 197 177 A1). Diese Einrichtung arbeitet aber weder schlupffrei noch verschleißarm, und sie hat daher nachteilige Einflüsse auf die Meßgenauigkeit des mit ihr ausgestatteten Gaszählers.

Die Aufgabe der Erfindung liegt in der Konzeption einer Meßeinrichtung, insbesondere eines Gaszählers, welche zur Temperaturkompensation ein Getriebe mit veränderbarer Übersetzung beinhaltet, das ohne Schlupf arbeitet, mit sehr geringen Reibungsverlusten und minimalem Verschleiß behaftet ist und das Meßwerk mit dem Zählwerk verbindet.

Zur Lösung der gestellten Aufgabe ist von einer bekannten Meßeinrichtung der eingangs bereits erwähnten Bauart mit einem Meßwerk, einem Zählwerk sowie einem zwischen diesen vorgesehenen Getriebe mit veränderbarer Übersetzung und mit einem an diesem Getriebe angreifenden, zur Verstellung des Übersetzungsverhältnisses dienenden Stellglied ausgegangen worden. Gelöst wird die Aufgabe dadurch, daß das Getriebe eine erste Welle und eine zweite Welle aufweist, die parallel nebeneinander liegen, daß auf der ersten Welle zwei unrunde, Zähne tragende erste Stirnräder sitzen, daß zwischen den beiden ersten Stirnrädern und der ersten Welle jeweils eine Überholkupplung angeordnet ist, wobei beide Überholkupplungen in gleichem Drehsinn wirken, daß auf der zweiten Welle zwei ebenfalls unrunde, zweite Stirnräder sitzen, die mit den ersten Stirnrädern jeweils kämmen, daß das eine zweite Stirnrad auf der zweiten Welle starr befestigt ist, daß das andere zweite Stirnrad auf der zweiten Welle drehbar gelagert ist und mittels einer Verdreheinrichtung gegenüber der zweiten Welle zwecks Veränderung der Übersetzung um einen Verstellwinkel begrenzt verdrehbar ist, und daß das Stellglied die Verdreheinrichtung betätigt.

Ein solches, mit unrunden Zahnrädern ausgestattetes Übersetzungsgetriebe läßt problemlos während seines Betriebes solche Veränderungen seiner Übersetzung zu, daß Temperaturänderungen des zu messenden Mediums (insbesondere des Gases) zwischen - 10 und +50 Grad Celsius ohne weiteres kompensiert werden können. Die benutzten, Zähne tragenden Stirnräder lassen keinen Schlupf zwischen der Eingangs- und der Ausgangswelle zu, die Reibungsverluste und der Verschleiß sind bei exakt ausgeführter Verzahnung, bei präzise gefertigten Überholkupplungen und entsprechender Wellenlagerung zu vernachlässigen. Der Umstand, daß bei dem konzipierten Getriebe bei gleichmäßiger Winkelgeschwindigkeit der antreibenden Welle die Winkelgeschwindigkeit der Abtriebswelle während jeder Wellenumdrehung periodisch oszilliert - die Abtriebswelle sich also mit nicht konstanter Winkelgeschwindigkeit dreht - spielt bei der Funktion der Meßeinrichtung keine Rolle; dieser Effekt kann sogar vorteilhaft dazu benutzt werden, die ebenfalls oszillierende Abtriebswellenbewegung des Meßwerkes eines Balgengaszählers ganz oder teilweise zu kompensieren. Aufgrund seiner Merkmale kann von dem Getriebe erwartet werden, daß es auch während einer sehr langen, zehn und mehr Jahre dauernden Einsatzzeit der Meßeinrichtung zuverlässig und ohne Schaden zu nehmen funktioniert.

Bei einer abgewandelten Ausführungsform der Erfindung ist das eine erste Stirnrad mit seiner Radscheibe mit dem Ende einer koaxial zur ersten Welle angeordneten Stummelwelle fest verbunden. Diese konstruktive Variante dient zur Einleitung des Drehmomentes durch die vorgeschlagene Stummelwelle.

Die vier unrunden Stirnräder des Getriebes können elliptischen Grundriß aufweisen. Dieser Grundriß gehorcht relativ einfachen geometrischen Gesetzen, was die Herstellung der Stirnräder und deren Verzahnung vereinfacht.

Es kann von Vorteil sein, wenn die beiden ersten und zweiten Stirnräder einen birnenförmigen Grundriß besitzen. Diese Grundrißform ergibt annähernd Proportionalität zwischen dem Verstellwinkel und dem Übersetzungsverhältnis.

Zwecks preiswerter Herstellung sind die beiden miteinander kämmenden Stirnradpaare zweckmäßig identisch ausgebildet und sie weisen demzufolge auch gleiche Zähnezahlen auf.

Sofern kleine, handelsübliche Überholkupplungen von hohlzylindrischer Gestalt Verwendung finden, werden diese zweckmäßig als Naben der beiden ersten Stirnräder verwendet.

Vorteilhaft weist die Verdreheinrichtung eine Hohlwelle auf, in welcher die zweite Welle drehbar angeordnet und auf der das andere, zweite Stirnrad starr befestigt ist. Diese konstruktive Ausgestaltung der Verdreheinrichtung ermöglicht die Einleitung des Drehmomentes in das Getriebe direkt über die zweite Welle.

Es ist zweckmäßig, wenn das Stellglied zur Temperaturkompensation herangezogen wird und zu diesem Zwecke einerseits an der zweiten Welle und andererseits an der Hohlwelle angreift und bei Änderungen der Umgebungstemperatur die Hohlwelle gegenüber der zweiten Welle verdreht.

Eine ausreichende Veränderbarkeit des Übersetzungsverhältnisses ergibt sich, wenn die Hohlwelle gegenüber der zweiten Welle um einen Verstellwinkel zwischen null und neunzig Winkelgraden verdrehbar ist.

Unter den vorgegebenen technischen Bedingungen ist das Übersetzungsverhältnis des Getriebes durch Verdrehen der Hohlwelle gegenüber der zweiten Welle zwischen 1:1 und 1:1,3 veränderbar.

Als Verstellglied zur Temperaturkompensation kann vorteilhaft ein Bimetall-Element dienen.

Das Bimetall-Element ist zweckmäßig eine Bimetall-Spirale, welche die Hohlwelle umgibt und mit ihrem inneren Ende an der zweiten Welle und mit ihrem äußeren Ende an der Hohlwelle angreift.

Die Erfindung wird nachstehend an einem Ausführungsbeispiel anhand der beigefügten beiden Zeichnungsblätter näher erläutert. In den Zeichnungen zeigen
- Fig. 1: eine Meßeinrichtung in Gestalt eines Gaszählers in einer Vorderansicht, in einer vereinfachten Darstellung;
- Fig. 2: ein für die Meßeinrichtung gemäß Figur 1 vorgesehenes Getriebe mit veränderbarer Übersetzung, von der Seite dargestellt, in einer schematischen Wiedergabe;
- Fig. 3: ein Getriebe für die Meßeinrichtung nach Figur 1 in einer etwas anderen Ausführungsform, ebenfalls von der Seite und schematisch dargestellt;
- Fig. 4: einen Schnitt durch das Getriebe nach Figur 2, geschnitten entlang der Linie IV - IV in Figur 2.

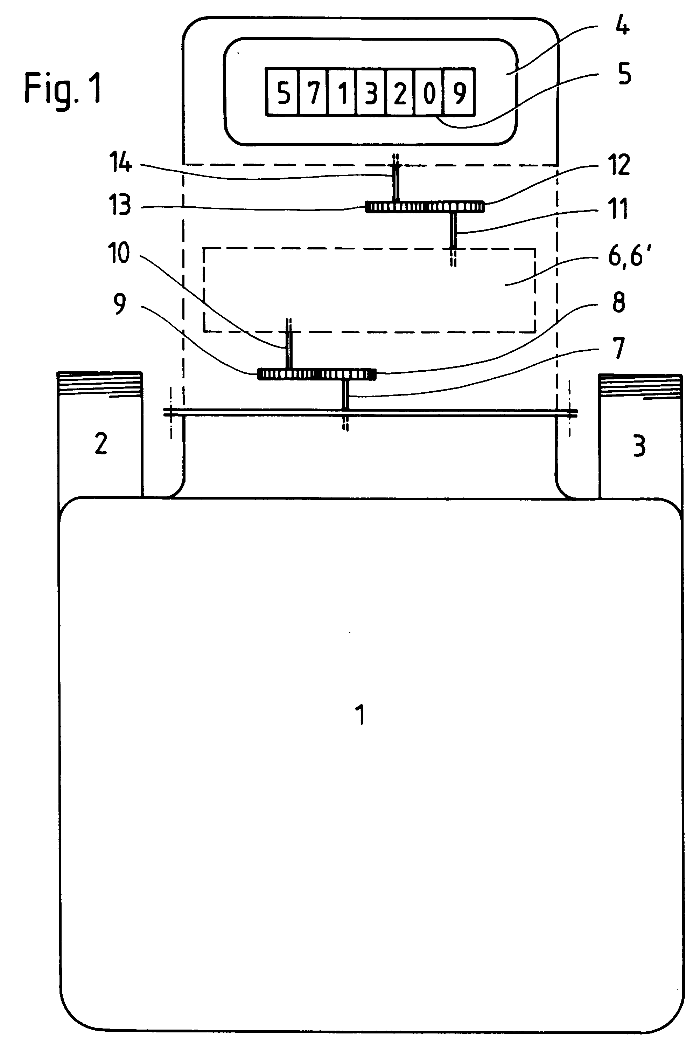

Bei der in Figur 1 erkennbaren Meßeinrichtung handelt es sich um einen Gaszähler, nämlich um einen Balgengaszähler, in dessen Innnern sich ein Meßwerk 1 mit zwei Meßkammern, einer Schieberanordnung und einem Hebel- und Kurbeltrieb (nicht dargestellt) befinden. Ein solcher Balgengaszähler ist beispielsweise in der deutschen Patentschrift 37 07 164 der Anmelderin ausführlich beschrieben. Das zu messende Gas tritt durch einen Gaseinlaßstutzen 2 in das Meßwerk 1 ein, betätigt abwechselnd die Meßkammern und verläßt das Meßwerk 1 durch einen Gasauslaßstutzen 3.

Im Oberteil des Gaszählers befindet sich ein mechanisches Zählwerk 4 mit einer Ziffernanzeige 5, die den Gasverbrauch anzeigt. Das Oberteil ist mit dem das Meßwerk 1 enthaltenen Unterteil des Gaszählers gasdicht und feuersicher verbunden.

Zwischen dem Meßwerk 1 und dem Zählwerk 4 ist ein Getriebe 6 mit einer veränderbaren Übersetzung angeordnet. Das Übersetzungsverhältnis dieses Getriebes 6 ist zwecks Temperaturkompensation verstellbar. Eine Temperaturkompensation ist erforderlich, weil die Gasdichte sich mit der Temperatur ändert.

Der Hebel- und Kurbeltrieb des Meßwerkes 1 betätigt eine Drehwelle 7 mit einem Zahnrad 8, welches in ein Antriebszahnrad 9 eingreift, das auf einer Antriebswelle 10 des Getriebes 6 sitzt. Eine Abtriebswelle 11 des Getriebes 6 trägt ein Abtriebszahnrad 12, dessen Zähne in diejenigen eines Zählwerkzahnrades 13 eingreifen, welches auf einer das Zählwerk 4 betätigten Zählwerkwelle 14 befestigt ist.

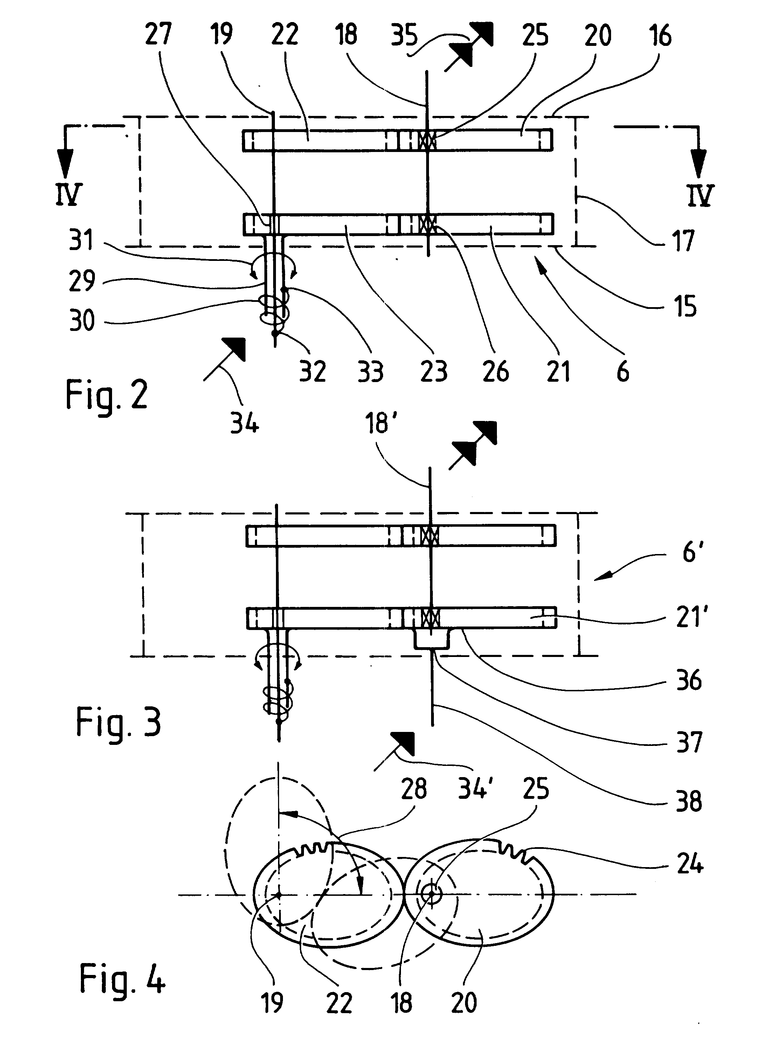

Das zwischen dem Meßwerk 1 und dem Zählwerk 4 vorgesehene Getriebe 6 weist - vergleiche Figur 2 - eine untere Lagerplatte 15 und eine obere Lagerplatte 16 auf, die parallel liegen und durch Lagerbolzen 17 miteinander verbunden sind. Zwischen den beiden Lagerplatten 15 und 16 befinden sich die Bestandteile des Getriebes 6.

Das Getriebe 6 weist eine erste Welle 18 und eine zweite Welle 19 auf, die parallel im Abstand nebeneinander liegen und in den beiden Lagerplatten 15 und 16 drehbar gelagert sind.

Auf der ersten Welle 18 sitzen zwei unrunde, erste Stirnräder 20, 21, und auf der zweiten Welle 19 sitzen ebenfalls zwei unrunde, zweite Stirnräder 22, 23. Das obere, erste Stirnrad 20 kämmt mit dem oberen, zweiten Stirnrad 22, und das untere, erste Stirnrad 21 kämmt mit dem unteren, zweiten Stirnrad 23. Die beiden ersten Stirnräder 20, 21 sowie die beiden zweiten Stirnräder 22, 23 sind identisch ausgebildet, sie weisen einen elliptischen Grundriß auf (vgl. Figur 4), sie tragen Zähne 24 bzw. entsprechende Zahnkränze und weisen gleiche Zähnezahlen auf. Alle Stirnräder 20 bis 23 können ebenso wie die Zahnkränze aus Kunststoff bestehen.

Zwischen den beiden ersten Stirnrädern 20, 21 und der ersten Welle 18 ist jeweils eine obere Überholkupplung 25 und eine untere Überholkupplung 26 angeordnet. Beide Überholkupplungen 25, 26 dienen als Naben der beiden ersten Stirnräder 20, 21, und sie sind so eingebaut, daß sie in gleichem Drehsinn wirken. Es handelt sich um handelsübliche, auch als "Freilauf bezeichnete Bauelemente. Das eine (das obere) zweite Stirnrad 22 ist auf der zweiten Welle 19 starr befestigt. Das andere (das untere) zweite Stirnrad 23 ist auf der zweiten Welle 19 bei 27 drehbar gelagert und mittels einer Verdreheinrichtung gegenüber der zweiten Welle 19 zur Veränderung des Übersetzungsverhältnisses um einen Verstellwinkel 28 (vgl. Figur 4) begrenzt verdrehbar. Diese Verdreheinrichtung weist eine Hohlwelle 29 auf, in welcher die zweite Welle 19 drehbar angeordnet ist und auf der das andere (das untere) zweite Stirnrad 23 starr befestigt ist. Der Verstellwinkel 28 der Hohlwelle 29 gegenüber der zweiten Welle 19 ist zwischen null und neunzig Winkelgraden variabel.

Ein Stellglied 30 betätigt die Verstelleinrichtung. Dieses Stellglied 30, welches zwecks Temperaturkompensation das Übersetzungsverhältnis des Getriebes 6 während seines Laufes stetig verändern kann, greift - wie in Figur 2 angedeutet - einerseits an der zweiten Welle 19 und andererseits an der Hohlwelle 29 an, und es verdreht in beiden Richtungen bei Änderungen der Umgebungstemperatur die Hohlwelle 29 gegenüber der zweiten Welle 19, wie dies mit dem gekrümmten Doppelpfeil 31 angedeutet ist. Das Stellglied 30 stellt eine Wirkverbindung zwischen der ersten Welle 19 und der Hohlwelle 29 her, die in den Grenzen des Verstellwinkels 28 veränderlich ist.

Beide zweiten Stirnräder 22 und 23 drehen sich zusammen mit der zweiten Welle 19, jedoch ist dabei ihre gegenseitige Winkelstellung während ihrer Drehung in Grenzen variabel. Das Getriebe 6 ist so konzipiert, daß sein Übersetzungsverhältnis durch Verdrehen der Hohlwelle 29 gegenüber der zweiten Welle 19 zwischen 1:1 und 1:1,3 veränderbar ist.

Das bei dem Getriebe 6 zur Temperaturkompensation benutzte Stellglied 30 ist ein Bimetall. Es handelt sich hier um eine handelsübliche Bimetall-Spirale, welche - wie in Figur 2 angedeutet - die Hohlwelle 29 lose umgibt und mit ihrem inneren Ende 32 an der zweiten Welle 19 und mit ihrem äußeren Ende 33 an der Hohlwelle 29 befestigt ist.

Bei dem in Figur 2 wiedergegebenen Getriebe 6 wird das vom Meßwerk 1 erzeugte Drehmoment gemäß dem großen Pfeil 34 auf die mit der Hohlwelle 29 verbundene zweite Welle eingeleitet und entsprechend dem großen Doppelpfeil 35 mit veränderter Drehzahl von der ersten Welle 18 an das Zählwerk 4 übermittelt. Diese Betriebsrichtung kann auch umgekehrt werden, indem das Drehmoment der ersten Welle 18 zugeführt und von der zweiten Welle 19 abgenommen wird.

Während des Betriebes des Getriebes 6 wird die zweite Welle 19 und die beiden zweiten, unrunden Stirnräder 22 und 23 vom Meßwerk 1 mit konstanter Winkelgeschwindigkeit angetrieben. Die beiden kämmenden, unrunden ersten Stirnräder 20 und 21 drehen sich mit einer nicht konstanten Winkelgeschwindigkeit. Die beiden Überholkupplungen 25, 26, auf welchen die beiden ersten Stirnräder 20, 21 sitzen, bewirken dabei, daß nur das momentan sich mit größerer Winkelgeschwindigkeit drehende erste Stirnrad 20 bzw. 21 die erste Welle 18 (hier die Abtriebswelle) mitnimmt. Ist der Verstellwinkel 28 zwischen den beiden zweiten Stirnrädern 22, 23 null, dann ist das Übersetzungsverhältnis 1:1, das heißt, eine Umdrehung der zweiten Welle 19 entspricht einer Umdrehung der ersten Welle 18, auch wenn dabei deren momentane Winkelgeschwindigkeit abwechselnd zunehmend und abnehmend sich ändert; diese Änderungen sind für das Zählwerk 4 unbeachtlich, weil es auf sie nicht reagiert.

Verdreht nun das Stellglied 30 (die Bimetall-Spirale) aufgrund einer Temperaturänderung des zu messenden Gases die beiden zweiten Stirnräder 22, 23 in ihrer gegenseitigen Winkellage zueinander, so daß sich ein Verstellwinkel 28 größer als null ergibt, dann stellt sich - wenn man die momentanen, verschieden großen Abstände des Kontaktpunkes der beiden Rollkurven auf der Verbindungslinie der Rotationsachse zu diesen Rotationsachsen bei den miteinander kämmenden Stirnrädern 20, 22 und 21, 23 betrachtet - eine größere Inkonstanz der Winkelgeschwindigkeit der beiden über die Überholkupplungen 25, 26 abtreibenden ersten Stirnräder 20, 21, was eine Vergrößerung des Übersetzungsverhältnisses zur Folge hat.

Das in Figur 3 dargestellte Getriebe 6' stimmt mit dem in Figur 2 dargestellten und oben eingehend erläuterten weitgehend überein. Nur ist das erste (untere) unrunde Stirnrad 21' mit seiner Radscheibe 36 mit dem Ende 37 einer koaxial zur ersten Welle 18' angeordneten Stummelwelle 38 fest verbunden. Diese Stummelwelle 38 dient bei dieser Ausführungsform zur Einleitung des Drehmomentes in das Getriebe 6' gemäß Pfeil 34'. Auch dieses Getriebe 6' ist in umgekehrter Richtung wirksam, das heißt, Antriebs- und Abtriebsseite sind vertauschbar.

### Zusammenstellung der verwendeten Bezugsziffern

- 1: Meßwerk
- 2: Gaseinlaßstutzen
- 3: Gasauslaßstutzen
- 4: Zählwerk
- 5: Ziffernanzeige
- 6: Getriebe
- 7: Drehwelle
- 8: Zahnrad
- 9: Antriebszahnrad
- 10: Antriebswelle
- 11: Abtriebswelle
- 12: Abtriebszahnrad
- 13: Zählwerkzahnrad
- 14: Zählwerkwelle
- 15: Lagerplatte (untere)
- 16: Lagerplatte (obere)
- 17: Lagerbolzen
- 18: (erste) Welle
- 19: (zweite) Welle
- 20: (erstes) Stirnrad (oberes)
- 21: (erstes) Stirnrad (unteres)
- 22: (zweites) Stirnrad (oberes)
- 23: (zweites) Stirnrad (unteres)
- 24: Zähne
- 25: Überholkupplung (obere)
- 26: Überholkupplung (untere)
- 27: drehbare Lagerung
- 28: Verstellwinkel
- 29: Hohlwelle
- 30: Stellglied
- 31: Doppelpfeil
- 32: (inneres) Ende
- 33: (äußeres) Ende
- 34: Pfeil
- 35: Doppelpfeil
- 6': Getriebe
- 21': (erstes) Stirnrad (unteres)
- 36: Radscheibe
- 37: Ende
- 18': (erste) Welle
- 38: Stummelwelle
- 34': Pfeil

## Patentansprüche

1. Meßeinrichtung, insbesondere Gaszähler, mit
- einem Meßwerk,
- einem Zählwerk,
- einem zwischen dem Meßwerk und dem Zählwerk vorgesehenen Getriebe mit veränderbarer Übersetzung und
- einem am Getriebe angreifenden, zur Verstellung des Übersetzungsverhältnisses dienenden Stellglied, dadurch **gekennzeichnet,** daß
- das Getriebe (6, 6') eine erste Welle (18) und eine zweite Welle (19) aufweist, die parallel nebeneinander liegen,
- auf der ersten Welle (18) zwei unrunde, Zähne tragende erste Stirnräder (20, 21) sitzen,
- zwischen den beiden ersten Stirnrädern (20, 21) und der ersten Welle (18) jeweils eine Überholkupplung (25, 26) angeordnet ist, wobei beide Überholkupplungen (25, 26) in gleichem Drehsinn wirken,
- auf der zweiten Welle (19) zwei unrunde, zweite Stirnräder (22, 23) sitzen, die mit den ersten Stirnrädern (20, 21) jeweils kämmen,
- das eine zweite Stirnrad (22) auf der zweiten Welle (19) starr befestigt ist,
- das andere zweite Stirnrad (23) auf der zweiten Welle (19) drehbar gelagert ist und mittels einer Verdreheinrichtung gegenüber der zweiten Welle (19) zwecks Veränderung der Übersetzung um einen Verstellwinkel (28) begrenzt verdrehbar ist und
- das Stellglied (30) die Verdreheinrichtung betätigt.

2. Meßeinrichtung nach Anspruch 1, dadurch **gekennzeichnet,** daß das eine erste Stirnrad (21') mit seiner Radscheibe (36) mit dem Ende (37) einer koaxialen zur ersten Welle (18') angeordneten Stummelwelle (38) fest verbunden ist.

3. Meßeinrichtung nach Anspruch 1, dadurch **gekennzeichnet,** daß die beiden ersten Stirnräder (20, 21) sowie die beiden zweiten Stirnräder (22, 23) elliptischen Grundriß aufweisen.

4. Meßeinrichtung nach Anspruch 1, dadurch **gekennzeichnet,** daß die beiden ersten Stirnräder (20, 21) sowie die beiden zweiten Stirnräder (22, 23) birnenförmigen Grundriß aufweisen.

5. Meßeinrichtung nach einem der Ansprüche 1 bis 4, dadurch **gekennzeichnet,** daß die ersten Stirnräder (20, 21) sowie die zweiten Stirnräder (22, 23) identisch ausgebildet sind und gleiche Zähnezahlen aufweisen.

6. Meßeinrichtung nach einem der Ansprüche 1 bis 5, dadurch **gekennzeichet,** daß die Überholkupplungen (25, 26) als Naben der beiden ersten Stirnräder (20, 21) dienen.

7. Meßeinrichtung nach einem der Ansprüche 1 bis 6, dadurch **gekennzeichnet,** daß die Verdreheinrichtung eine Hohlwelle (29) aufweist, in welcher die zweite Welle (19) drehbar angeordnet und auf der das andere, zweite Stirnrad (22) starr befestigt ist.

8. Meßeinrichtung nach Anspruch 7, dadurch **gekennzeichnet,** daß das Stellglied (30) zur Temperaturkompensation dient und einerseits an der zweiten Welle (19) und andererseits an der Hohlwelle (29) angreift und bei Änderungen der Umgebungstemperatur die Hohlwelle (29) gegenüber der zweiten Welle (19) verdreht.

9. Meßeinrichtung nach Anspruch 8, dadurch **gekennzeichnet,** daß der Verstellwinkel (28) der Hohlwelle (29) gegenüber der zweiten Welle (19) zwischen null und neunzig Winkelgraden variabel ist.

10. Meßeinrichtung nach einem der Ansprüche 1 bis 9, dadurch **gekennzeichnet,** daß das Übersetzungsverhältnis des Getriebes (6, 6') durch Verdrehen der Hohlwelle (29) gegenüber der zweiten Welle (19) zwischen 1:1 und 1:1,3 veranderbar ist.

11. Meßeinrichtung nach einem der Ansprüche 8 bis 10, dadurch **gekennzeichnet,** daß das Stellglied (30) zur Temperaturkompensation ein Bimetall-Element ist.

12. Meßeinrichtung nach Anspruch 11, dadurch **gekennzeichnet,** daß das Bimetall-Element eine Bimetall-Spirale ist, welche die Hohlwelle (29) umgibt und mit ihrem inneren Ende (32) an der zweiten Welle (19) und mit ihrem äußeren Ende (33) an der Hohlwelle (29) angreift.

## Claims

1. Measuring device, in particular a gas meter, with
- a measuring mechanism,
- a counting mechanism,
- a gear unit with a variable gear ratio provided between the measuring mechanism and the counting mechanism and
- an actuating member which acts on the gear unit and serves to adjust the gear ratio, characterised in that
- the gear unit (6, 6') comprises a first shaft (18) and a second shaft (19) which lie parallel next to one another,
- two non-circular, teeth-bearing first spur gears (20, 21) are mounted on the first shaft (18),
- a respective overrunning clutch (25, 26) is disposed between the two first spur gears (20, 21) and the first shaft (18), both overrunning clutches (25, 26) acting in the same direction of rotation,
- two non-circular, second spur gears (22, 23), which mesh with the first spur gears (20, 21), are mounted on the second shaft (19),
- one second spur gear (22) is rigidly attached to the second shaft (19),
- the other second spur gear (23) is rotatably mounted on the second shaft (19) and can be turned within limits with respect to the second shaft (19) through an adjustment angle (28) by means of a turning device for the purpose of varying the gear ratio, and
- the actuating member (30) actuates the turning device.

2. Measuring device according to claim 1, characterised in that one first spur gear (21') is firmly connected by its wheel disc (36) to the end (37) of a stub shaft (38) disposed coaxially with the first shaft (18').

3. Measuring device according to claim 1, characterised in that the two first spur gears (20, 21) and the two second spur gears (22, 23) have an elliptical plan form.

4. Measuring device according to claim 1, characterised in that the two first spur gears (20, 21) and the two second spur gears (22, 23) have a pear-shaped plan form.

5. Measuring device according to one of claims 1 to 4, characterised in that the first spur gears (20, 21) and the second spur gears (22, 23) are formed in an identical manner and have the same number of teeth.

6. Measuring device according to one of claims 1 to 5, characterised in that the overrunning clutches (25, 26) serve as hubs of the two first spur gears (20, 21).

7. Measuring device according to one of claims 1 to 6, characterised in that the turning device comprises a hollow shaft (29), in which the second shaft (19) is rotatably disposed and to which the other, second spur gear (22) is rigidly attached.

8. Measuring device according to claim 7, characterised in that the actuating member (30) is used for temperature compensation, acts on one side on the second shaft (19) and on the other on the hollow shaft (29) and turns the hollow shaft (29) with respect to the second shaft (19) when changes in the ambient temperature occur.

9. Measuring device according to claim 8, characterised in that the adjustment angle (28) of the hollow shaft (29) with respect to the second shaft (19) can be varied between zero and ninety angular degrees.

10. Measuring device according to one of claims 1 to 9, characterised in that the gear ratio of the gear unit (6, 6') can be varied between 1:1 and 1:1.3 by turning the hollow shaft (29) with respect to the second shaft (19).

11. Measuring device according to one of claims 8 to 10, characterised in that the actuating member (30) for temperature compensation is a bimetallic element.

12. Measuring device according to claim 11, characterised in that the bimetallic element is a bimetallic coil which surrounds the hollow shaft (29) and acts by way of its inner end (32) on the second shaft (19) and by way of its outer end (33) on the hollow shaft (29).

## Revendications

1. Dispositif de mesure, notamment un compteur à gaz, avec :
- un élément de mesure,
- une minuterie,
- un engrenage de rapport variable prévu entre l'élément de mesure et la minuterie, et
- un organe de réglage agissant sur l'engrenage et servant à régler le rapport de transmission, caractérisé en ce que
- l'engrenage (6, 6') présente un premier arbre (18) et un second arbre (19), juxtaposés et parallèles entre eux,
- deux premiers pignons droits excentriques (20, 21), portant des dents, sont montés sur le premier arbre (18),
- un accouplement de rattrapage (25, 26) est respectivement disposé entre les deux premiers pignons droits (20, 21) et le premier arbre (18), les deux accouplements de rattrapage (25, 26) agissant dans le même sens de rotation,
- deux seconds pignons droits (22, 23), excentriques, sont montés sur le second arbre (19), ces pignons engrenant respectivement avec les premiers pignons droits (20, 21),
- l'un des seconds pignons droits (22) est fixé rigidement sur le second arbre (19),
- l'autre second pignon droit (23) est monté avec une possibilité de rotation sur le second arbre (19), et peut être animé d'un mouvement de rotation limité d'un angle de déplacement (28), au moyen d'un dispositif de mise en rotation, par rapport au second arbre (19) en vue de modifier le rapport de transmission, et en ce que
- l'organe de réglage (30) actionne le dispositif de mise en rotation.

2. Dispositif de mesure suivant la revendication 1, caractérisé en ce que l'un des premiers pignons droits (21') est assemblé fixement, par son disque de roue (36), avec l'extrémité (37) d'un arbre en bout (38) coaxial au premier arbre (18').

3. Dispositif de mesure suivant la revendication 1, caractérisé en ce que les deux premiers pignons droits (20, 21), ainsi que les deux seconds pignons droits (22, 23), sont elliptiques en projection horizontale.

4. Dispositif de mesure suivant la revendication 1, caractérisé en ce que les deux premiers pignons droits (20, 21), ainsi que les deux seconds pignons droits (22, 23), sont piriformes en projection horizontale.

5. Dispositif de mesure suivant l'une des revendications 1 à 4, caractérisé en ce que les premiers pignons droits (20, 21), ainsi que les seconds pignons droits (22, 23), ont une réalisation identique et présentent le même nombre de dents.

6. Dispositif de mesure suivant l'une des revendications 1 à 5, caractérisé en ce que les accouplements de rattrapage (25, 26) servent de moyeux pour les deux premiers pignons droits (20, 21).

7. Dispositif de mesure suivant l'une des revendications 1 à 6, caractérisé en ce que le dispositif de mise en rotation présente un arbre creux (29), dans lequel est monté en rotation le second arbre (19), et sur lequel est fixé rigidement l'autre second pignon droit (22).

8. Dispositif de mesure suivant la revendication 7, caractérisé en ce que l'organe de réglage (30) sert à la compensation de température, agit sur le second arbre (19), d'une part, et sur l'arbre creux (29), d'autre part, et fait tourner l'arbre creux (29) par rapport au second arbre (19) lors d'une variation de la température ambiante.

9. Dispositif de mesure suivant la revendication 8, caractérisé en ce que l'angle de déplacement (28) de l'arbre creux (29) par rapport au second arbre (19) peut varier de 0 à 90°.

10. Dispositif de mesure suivant l'une des revendications 1 à 9, caractérisé en ce que le rapport de l'engrenage (6, 6') est modifiable de 1 : 1 à 1 : 1,3 par la rotation de l'arbre creux (29) par rapport au second arbre (19).

11. Dispositif de mesure suivant l'une des revendications 8 à 10, caractérisé en ce que l'organe de réglage (30), prévu pour la compensation de température, est un élément à bilame.

12. Dispositif de mesure suivant la revendication 11, caractérisé en ce que l'élément à bilame est une spirale à bilame, qui enveloppe l'arbre creux (29) et agit sur le second arbre (19) par son extrémité interne (32), et sur l'arbre creux (29) par son extrémité externe (33).
